# EUROPEAN PATENT SPECIFICATION

(11) **EP 3 301 875 B1**
(45) Date of publication and mention of the grant of the patent: **21.08.2019**
(21) Application number: 15896659.8
(22) Date of filing: 29.06.2015
(51) Int. Cl.: H04L 12/917, H04L 29/12, H04L 29/08

(54) **INTERNET PROTOCOL ADDRESS ALLOCATION METHOD AND RELAY DEVICE**
INTERNETPROTOKOLLADRESSZUWEISUNGSVERFAHREN UND RELAISVORRICHTUNG
PROCÉDÉ D'ATTRIBUTION D'ADRESSES DE PROTOCOLE INTERNET ET DISPOSITIF DE RELAIS

(43) Date of publication of application: 04.04.2018
(73) Proprietor: Huawei Technologies Co., Ltd., Longgang District Shenzhen, Guangdong 518129 (CN)
(72) Inventor: RAO, Gaowang, Shenzhen Guangdong 518129 (CN)
(74) Representative: Thun, Clemens
(86) International application number: PCT/CN2015/082678
(87) International publication number: WO 2017/000128

(56) References cited:
- EP-A1- 1 718 032
- CN-A- 101 510 902
- CN-A- 101 951 417
- CN-A- 102 439 949
- CN-A- 102 439 949
- US-A1- 2007 002 833
- T'JOENS C HUBLET ALCATEL P DE SCHRIJVER MIND Y: "DHCP reconfigure extension; rfc3203.txt", DHCP RECONFIGURE EXTENSION; RFC3203.TXT, INTERNET ENGINEERING TASK FORCE, IETF; STANDARD, INTERNET SOCIETY (ISOC) 4, RUE DES FALAISES CH- 1205 GENEVA, SWITZERLAND, 1 December 2001 (2001-12-01), XP015008982,

## Description

### TECHNICAL FIELD

Embodiments of the present invention relate to the field of communications technologies, and in particular, to an Internet Protocol address allocation method and a relay device.

### BACKGROUND

The Dynamic Host Configuration Protocol (Dynamic Host Configuration Protocol, DHCP) is a dynamic address allocation solution based on the TCP/IP (Transmission Control Protocol/Internet Protocol, Transmission Control Protocol/Internet Protocol) protocol. Compared with manually configuring an IP address, DHCP has the following advantages: TCP/IP parameters (including an IP address, a subnet mask, a default gateway, a DNS, and the like) can be configured automatically, there is a lease time for an allocated IP address, the allocated IP address can be reclaimed and reused after the lease time expires, and the like. Therefore, all configuration information of the TCP/IP protocol may be stored on a DHCP server in a centralized manner. Centralized storage and management can avoid an IP address conflict, and free an administrator from heavy manual configuration work. As a scale of a current network is larger, advantages of DHCP are more obvious.

Further, EP 1 178 032 A1 refers to an access unit for coupling a plurality of subscribers to a data communication network, and comprising an auto-configuration control unit adapted to learn, from first auto-configuration data issued by an auto-configuration server and transiting through said access unit towards a particular subscriber coupled to said access unit, a particular network address as being dynamically assigned to said particular subscriber.

Further, CN 102 439 949 A refers to a method for solving an internet protocol address assignment conflict and a related device and a system, wherein the method for solving the internet protocol address assignment conflict comprises the steps of using a relay device to receive a request message used for requiring to distribute an internet protocol IP address sent by a user terminal; transmitting the request message to a dynamic host configuration protocol server; receiving a request response message sent by the dynamic host configuration protocol server, wherein, the request response message carries an IP address distributed to the user terminal by the dynamic host configuration protocol server; according to user online information, detecting whether the IP address exists an assignment conflict, if yes, ending the request response message and noticing the dynamic host configuration protocol server that the IP address is conflicting.

In networking of an existing network, a DHCP server and a DHCP client are not directly connected, but are generally connected by using an access device. The access device used for relaying and forwarding an DHCP message is a DHCP relay (DHCP relay) device. In an Internet Protocol address (IP address) allocation process, a same IP address may be allocated to different clients. In this case, on the clients, services of users may be affected due to an ARP (Address Resolution Protocol, Address Resolution Protocol) conflict. Some of existing relay devices cannot recognize an IP address conflict, and the clients also cannot recognize the IP address conflict due to reasons such as user isolation. Some other relay devices can recognize an IP address conflict between a user that goes online later and a user that goes online earlier, but after recognizing the IP address conflict, the relay devices can only discard a message for allocating an IP address by the DHCP server to the user that goes online later. Consequently, the user that goes online later always cannot dial up successfully. Even if a relay device initiates ARP detection to the user that goes online earlier, because the user that goes online earlier is an online user and also responds to the ARP detection, the user that goes online earlier cannot be deleted.

### SUMMARY

In a first aspect an Internet Protocol, IP, address allocation method performed by a relay device is provided, the method comprising the following steps:
**a.)** receiving from a Dynamic Host Configuration Protocol, DHCP, server, a first IP address allocated to a first user;
**b.)** detecting that the first IP address allocated to the first user and an IP address already allocated by the DHCP server to a second user are duplicate, and that the IP address already allocated to the second user is still within a lease time, wherein the relay device stores the IP address already allocated to the second user and the lease time of the IP address already allocated to the second user;
**c.)** sending a force renew message to the second user, wherein the force renew message instructs the second user to request IP address renewal, and the force renew message carries an IP address of the DHCP server;
**d.)** waiting for a predetermined time, and determining that no DHCP renew request message is received from the second user within the predetermined time, wherein the DHCP renew request message is used to request to renew the IP address of the second user;
**e.)** sending a DHCP reject message to the DHCP server, wherein the DHCP reject message is used to notify the DHCP server that the first IP address allocated to the first user is unavailable, and the DHCP reject message carries the first IP address allocated to the first user and a Media Access Control, MAC, address of the first user;
**f.)** interacting with the first user and the DHCP server to reallocate a second IP address to the first user, wherein the second IP address reallocated to the first user is different from the IP address already allocated to the second user.

In a first implementation form of the first aspect, before the sending the DHCP reject message to the DHCP server, the method further comprises:
checking whether the second user is online, and if the second user is online, sending the DHCP reject message to the DHCP server.

In a second aspect a relay device is configured and intended to perform any of the above methods.

In the embodiments of the present invention, a relay device stores an IP address already allocated to a user and a lease time of the IP address already allocated to the user, and can recognize an IP address conflict. Therefore, a problem that some users cannot go online in a scenario of an IP address conflict is resolved by performing message forwarding, operation and maintenance costs of an existing network device in this scenario are reduced, service experience of the user is improved, and competitiveness of the relay device is enhanced.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.
FIG. 1 is a diagram of interaction between a user, a relay device, and a server in an IP address allocation process according to Embodiment 1 of the present invention;
FIG. 2 is a diagram of interaction between a user, a relay device, and a server in an IP address allocation process according to Embodiment 2 of the present invention;
FIG. 3 is a flowchart of an IP address allocation method according to Embodiment 3 of the present invention;
FIG. 4 is a flowchart of an IP address allocation method according to Embodiment 4 of the present invention;
FIG. 5 is a flowchart of an IP address allocation method according to Embodiment 5 of the present invention; and
FIG. 6 is a structural diagram of a relay device according to Embodiment 6 of the present invention.

### DESCRIPTION OF EMBODIMENTS

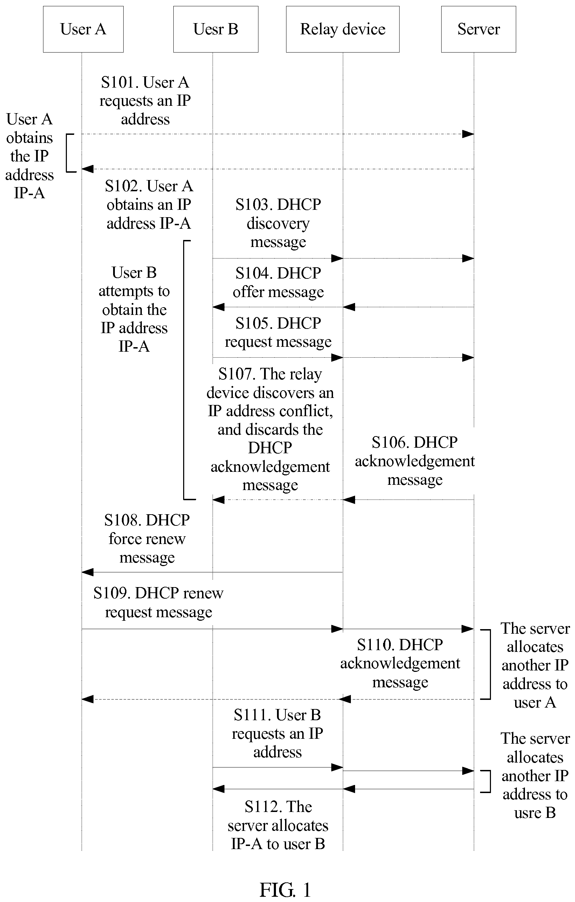

FIG. 1 is a diagram of interaction between a user, a relay device, and a server in an IP address allocation process according to Embodiment 1 of the present invention. In step S101, user A requests an IP address from a server through a relay device. In step S102, the server responds to the request of user A, and allocates an IP address IP-A to user A. Specifically, user A may send a DHCP discovery (DHCP discovery) message to a DHCP server through the relay device, where the DHCP discovery message is used to discover the DHCP server; the DHCP server feeds back a DHCP offer (DHCP offer) message to user A through the relay device, where the DHCP offer message carries an IP address offered by the DHCP server; then, user A sends a DHCP request (DHCP request) message to the DHCP server through the relay device, where the DHCP request message requests the DHCP server to allocate the IP address offered by the DHCP server; and the DHCP server sends a DHCP acknowledgement (DHCP ACK) message to user A through the relay device, where the DHCP acknowledgement message confirms to allocate the IP address offered by the DHCP server to user A.

In steps S103 to S107, user B attempts to obtain the IP address IP-A. User B first sends a DHCP discovery message to the DHCP server; the DHCP server sends a DHCP offer message to user B through the relay device; user B then sends a DHCP request message to the DHCP server through the relay device; the DHCP server sends a DHCP acknowledgement message to user B through the relay device, where the DHCP acknowledgement message carries the IP address IP-A; and when the DHCP acknowledgement message arrives at the relay device, the relay device discovers that the IP address allocated by the server to user B conflicts with the IP address IP-A of user A, and the relay device discards the DHCP acknowledgement message.

A conventional practice is: after the relay device discards the DHCP acknowledgement message in step S107, the process goes back to step S103 in which user B initiates a DHCP discovery message to the server again; then, steps S104, S105, S106, and S107 for performing interaction between user B, the relay device, and the server are repeated, and this is performed cyclically.

In this embodiment of the present invention, the relay device needs to store the IP address already allocated to user A and a lease time of the IP address already allocated to the user A. Therefore, after discovering the IP address conflict, the relay device may further check whether the IP address allocated to user A is within the lease time. If the relay device detects that the IP address allocated to user B and the IP address already allocated by the DHCP server to user A are duplicate, and that the IP address already allocated to user A is still within the lease time, in step S108, the relay device simulates the server to send a DHCP force renew (Force Renew) message to user B, where the DHCP force renew message carries an IP address of the server rather than an IP address of the relay device. In step S109, client A sends a DHCP renew request message to the DHCP server through the relay device, requesting the DHCP server to allocate an IP address to client A. In S110, the DHCP server feeds back a DHCP acknowledgement message to client A, and allocates another IP address IP-C to client A. In this case, the relay device stores the new IP address IP-C of the client A. In step Sill, client B requests an IP address through the relay device again, and the DHCP server allocates IP-A to client B in step S112. It should be noted that, in step 112, the DHCP server may also allocate another IP address different from IP-A and IP-C to client B.

Before performing step S110, and after receiving the DHCP renew request message, the DHCP server may send a DHCP negative acknowledgement (DHCP NAK) message to user A, where the DHCP negative acknowledgement message notifies user A that the IP address previously allocated to user A is unavailable; then, user A may send a DHCP discovery message to the DHCP server through the relay device, where the DHCP discovery message is used to discover the DHCP server; the DHCP server feeds back a DHCP offer message to user A through the relay device, where the DHCP offer message carries another IP address IP-C offered by the DHCP server; then, user A sends a DHCP request message to the DHCP server through the relay device, where the DHCP request message requests the DHCP server to allocate the IP address IP-C offered by the DHCP server. Then the DHCP server sends a DHCP acknowledgement message to user A through the relay device, where the DHCP acknowledgement message confirms to allocate the IP address IP-C offered by the DHCP server to user A.

In this embodiment of the present invention, before performing step S108, the relay device may check whether user A is online; and if user A is online, perform step S108 to send the force renew message to user A. If user A is not online, data of user A may be deleted, and IP-A is directly allocated to user B.

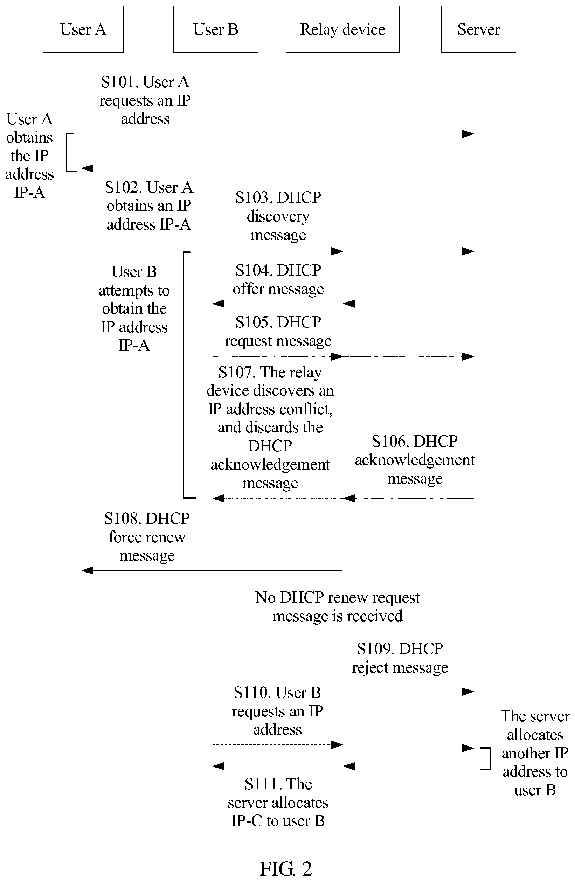

FIG. 2 is a diagram of interaction between a user, a relay device, and a server in an IP address allocation process according to Embodiment 2 of the present invention. Step S101 to step S108 in Embodiment 2 are the same as those in Embodiment 1. A difference from Embodiment 1 lies in that, after the relay device simulates the server to send a DHCP force renew message to user A in step S108, where the DHCP force renew message carries an IP address of the server, because client A does not support DHCP force renew, client A does not send a DHCP request message to the server through the relay device. After waiting for a predetermined time, if the relay device does not receive a DHCP request message, the relay device sends a DHCP reject message to the server in step S109, notifying the server that the IP address IP-A is unavailable. In step S110, client B requests an IP address through the relay device again, and the server allocates IP-C to client B in step S111. It should be easily understood that, the time when the relay device waits for the DHCP request message may be determined according to factors such as a quantity of IP addresses on the server and a quantity of clients requesting IP addresses, or may be determined according to a priority of client B, and is not specifically limited herein. It is easily understood that, similar to Embodiment 1, a process of allocating an IP address to client B in step S110 and step Sill may be fractionalized into four steps: DHCP discovery, DHCP offer, DHCP request, and DHCP acknowledgement.

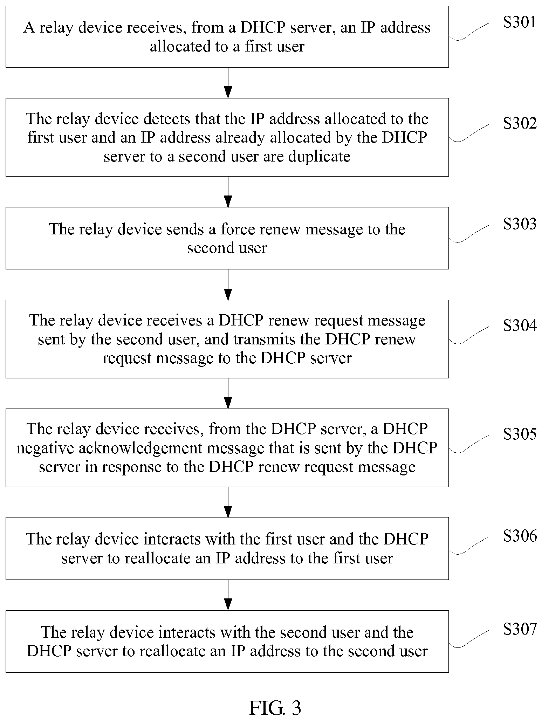

FIG. 3 is a flowchart of an IP address allocation method according to Embodiment 3 of the present invention. The method includes the following steps.

S301. A relay device receives, from a DHCP Dynamic Host Configuration Protocol server, an IP address allocated to a first user.

S302. The relay device detects that the IP address allocated to the first user and an IP address already allocated by the DHCP server to a second user are duplicate, and that the IP address already allocated to the second user is still within a lease time.

Herein the relay device stores the IP address already allocated to the second user and the lease time of the IP address already allocated to the second user.

S303. The relay device sends a force renew message to the second user, where the force renew message instructs the second user to request IP address renewal.

The force renew message carries an IP address of the DHCP server.

Before the relay device sends the force renew message to the second user, the IP address allocation method in Embodiment 3 may further include: the relay device checks whether the second user is online, and if the second user is online, sends the force renew message to the second user.

S304. The relay device receives a DHCP renew request message sent by the second user, and transmits the DHCP renew request message to the DHCP server.

The DHCP renew request message is used to trigger the DHCP server to renew the IP address of the second user.

Requesting to renew the IP address of the second user may include at least one of the following two cases: requesting to allocate a new IP address to the second user, or requesting to extend the lease time of the IP address currently used by the second user.

S305. The relay device receives, from the DHCP server, a DHCP negative acknowledgement (DHCP NAK) message that is sent by the DHCP server in response to the DHCP renew request message, where the DHCP negative acknowledgement message notifies the second user that the IP address already allocated to the second user is unavailable.

S306. The relay device interacts with the first user and the DHCP server to reallocate an IP address to the first user.

That the relay device interacts with the first user and the DHCP server to reallocate an IP address to the first user may include: the relay device receives a DHCP discovery message from the first user, and sends the DHCP discovery message to the DHCP server, where the DHCP discovery message is used to discover the DHCP server; the relay device receives a DHCP offer message from the DHCP server, and the relay device sends the DHCP offer message to the first user, where the DHCP offer message carries an IP address offered by the DHCP server; the relay device receives a DHCP request message from the first user, and sends the DHCP request message to the DHCP server, where the DHCP request message requests the DHCP server to allocate the IP address offered by the DHCP server; and the relay device receives a DHCP acknowledgement message from the DHCP server, where the DHCP acknowledgement message confirms to allocate the IP address offered by the DHCP server to the first user.

S307. The relay device interacts with the second user and the DHCP server to reallocate an IP address to the second user.

That the relay device interacts with the second user and the DHCP server to reallocate an IP address to the second user may include: the relay device receives a DHCP discovery message from the second user, and sends the DHCP discovery message to the DHCP server, where the DHCP discovery message is used to discover the DHCP server; the relay device receives a DHCP offer message from the DHCP server, and the relay device sends the DHCP offer message to the second user, where the DHCP offer message carries an IP address offered by the DHCP server; the relay device receives a DHCP request message from the second user, and sends the DHCP request message to the DHCP server, where the DHCP request message requests the DHCP server to allocate the IP address offered by the DHCP server; and the relay device receives a DHCP acknowledgement message from the DHCP server, where the DHCP acknowledgement message confirms to allocate the IP address offered by the DHCP server to the second user.

In one case, the IP address reallocated to the second user is different from the IP address already allocated to the second user, and the IP address reallocated to the first user is different from the IP address already allocated to the second user.

Optionally, in another case, the IP address reallocated to the second user is the same as the IP address already allocated to the second user, and the IP address reallocated to the first user is different from the IP address already allocated to the second user.

Optionally, in another case, the IP address reallocated to the second user is different from the IP address already allocated to the second user, and the IP address reallocated to the first user is the same as the IP address already allocated to the second user.

In this embodiment of the present invention, a relay device stores an IP address already allocated to a user and a lease time of the IP address already allocated to the user, and can recognize an IP address conflict. Therefore, a problem that some users cannot go online in a scenario of an IP address conflict is resolved by performing message forwarding, operation and maintenance costs of an existing network device in this scenario are reduced, service experience of the user is improved, and competitiveness of the relay device is enhanced.

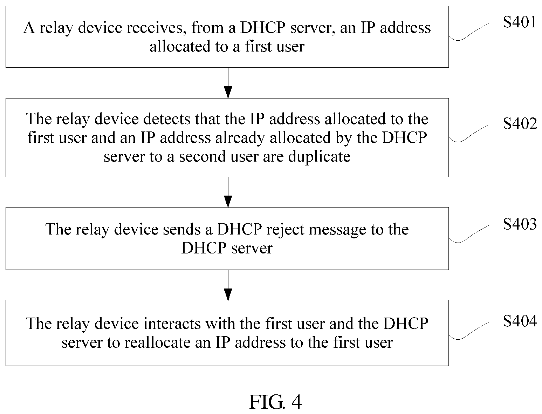

FIG. 4 is a flowchart of an IP address allocation method according to Embodiment 4 of the present invention. The method includes the following steps.

S401. A relay device receives, from a DHCP Dynamic Host Configuration Protocol server, an IP address allocated to a first user.

S402. The relay device detects that the IP address allocated to the first user and an IP address already allocated by the DHCP server to a second user are duplicate, and that the IP address already allocated to the second user is still within a lease time.

Herein the relay device stores the IP address already allocated to the second user and the lease time of the IP address already allocated to the second user.

S403. The relay device sends a DHCP reject message to the DHCP server, where the DHCP reject message is used to notify the DHCP server that the IP address allocated to the first user is unavailable.

The DHCP reject message carries the IP address allocated to the first user and a MAC (Media Access Control, Media Access Control) address of the first user.

Before the relay device sends the DHCP reject message to the DHCP server, the IP address allocation method in Embodiment 4 may further include: the relay device checks whether the second user is online, and if the second user is online, sends the DHCP reject message to the DHCP server.

S404. The relay device interacts with the first user and the DHCP server to reallocate an IP address to the first user, where the IP address reallocated to the first user is different from the IP address already allocated to the second user.

That the relay device interacts with the first user and the DHCP server to reallocate an IP address to the first user may include: the relay device receives a DHCP discovery message from the first user, and sends the DHCP discovery message to the DHCP server, where the DHCP discovery message is used to discover the DHCP server; the relay device receives a DHCP offer message from the DHCP server, and the relay device sends the DHCP offer message to the first user, where the DHCP offer message carries an IP address offered by the DHCP server; the relay device receives a DHCP request message from the first user, and sends the DHCP request message to the DHCP server, where the DHCP request message requests the DHCP server to allocate the IP address offered by the DHCP server; and the relay device receives a DHCP acknowledgement message from the DHCP server, where the DHCP acknowledgement message confirms to allocate the IP address offered by the DHCP server to the first user.

Before step S403 in this embodiment of the present invention, that is, before the relay device sends the DHCP reject message to the DHCP server, this embodiment of the present invention may further include the following steps.

S4031. The relay device sends a force renew message to the second user, where the force renew message instructs the second user to request IP address renewal.

The force renew message carries an IP address of the DHCP server.

S4032. The relay device waits for a predetermined time, and determines that no DHCP renew request message is received from the second user within the predetermined time. The DHCP renew request message is used to request the DHCP server to renew the IP address of the second user. In this case, the relay device sends the DHCP reject message to the DHCP server only after confirming that no DHCP request message is received from the second user.

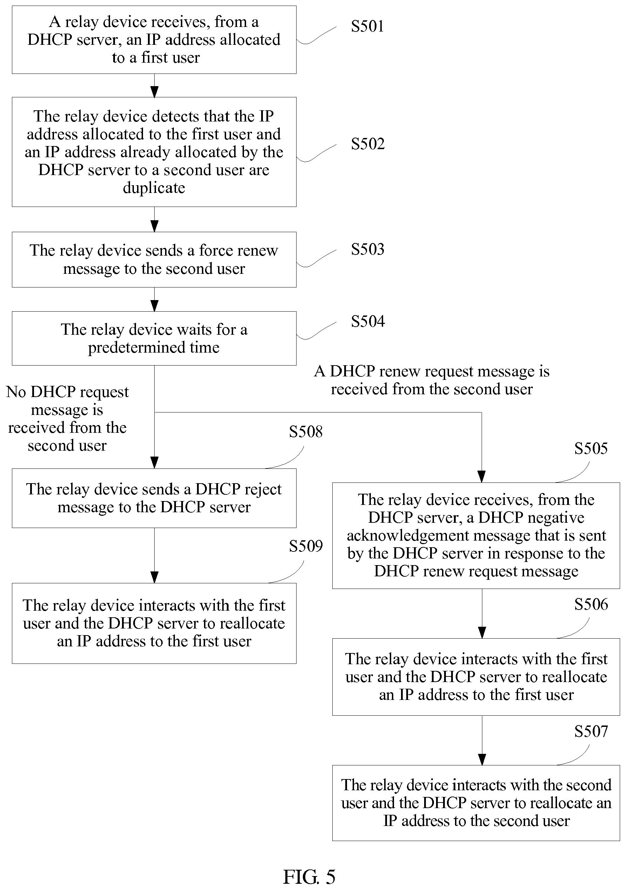

FIG. 5 is a flowchart of an IP address allocation method according to Embodiment 5 of the present invention. The method includes the following steps.

S501. A relay device receives, from a DHCP Dynamic Host Configuration Protocol server, an IP address allocated to a first user.

S502. The relay device detects that the IP address allocated to the first user and an IP address already allocated by the DHCP server to a second user are duplicate, and that the IP address already allocated to the second user is still within a lease time.

Herein the relay device stores the IP address already allocated to the second user and the lease time of the IP address already allocated to the second user.

S503. The relay device sends a force renew message to the second user, where the force renew message instructs the second user to request IP address renewal.

The force renew message carries an IP address of the DHCP server.

Before the relay device sends the force renew message to the second user, the IP address allocation method in Embodiment 5 may further include: the relay device checks whether the second user is online, and if the second user is online, sends the force renew message to the second user.

S504. The relay device waits for a predetermined time.

If the relay device receives, within the predetermined time, a DHCP renew request message sent by the second user, the relay device transmits the DHCP renew request message to the DHCP server. In this case, in the IP address allocation method in this embodiment, steps S505 to S507 are performed.

The DHCP renew request message is used to request the DHCP server to renew the IP address of the second user. Requesting to renew the IP address of the second user may include at least one of the following two cases: requesting to allocate a new IP address to the second user, or requesting to extend the lease time of the IP address currently used by the second user.

S505. The relay device receives, from the DHCP server, a DHCP negative acknowledgement message that is sent by the DHCP server in response to the DHCP renew request message, where the DHCP negative acknowledgement message notifies the second user that the IP address already allocated to the second user is unavailable.

S506. The relay device interacts with the first user and the DHCP server to reallocate an IP address to the first user.

S507. The relay device interacts with the second user and the DHCP server to reallocate an IP address to the second user.

In one case, the IP address reallocated to the second user is different from the IP address already allocated to the second user, and the IP address reallocated to the first user is different from the IP address already allocated to the second user.

Optionally, in another case, the IP address reallocated to the second user is the same as the IP address already allocated to the second user, and the IP address reallocated to the first user is different from the IP address already allocated to the second user.

Optionally, in another case, the IP address reallocated to the second user is different from the IP address already allocated to the second user, and the IP address reallocated to the first user is the same as the IP address already allocated to the second user.

If the relay device receives no DHCP renew request message from the second user within the predetermined time after step 504, in the IP address allocation method in this embodiment, steps S508 and S509 are performed.

S508. The relay device sends a DHCP reject message to the DHCP server, where the DHCP reject message is used to notify the DHCP server that the IP address allocated to the first user is unavailable.

S509. The relay device interacts with the first user and the DHCP server to reallocate an IP address to the first user, where the IP address reallocated to the first user is different from the IP address already allocated to the second user.

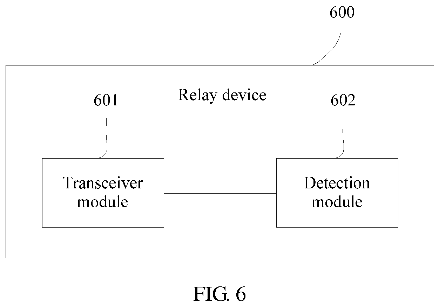

FIG. 6 is a structural diagram of a relay device according to Embodiment 6 of the present invention. The relay device includes:
a transceiver module 601, configured to receive, from a DHCP Dynamic Host Configuration Protocol server, an IP address allocated to a first user; and
a detection module 602, configured to detect whether the IP address allocated to the first user and an IP address already allocated by the DHCP server to a second user are duplicate, and whether the IP address already allocated to the second user is still within a lease time, where the relay device may store, in an included storage module, the IP address already allocated to the second user and the lease time of the IP address already allocated to the second user, and the storage module may be a memory; where
the transceiver module 601 is further configured to: when the detection module 602 detects that the IP address allocated to the first user and the IP address already allocated by the DHCP server to the second user are duplicate, and that the IP address already allocated to the second user is still within the lease time, send a force renew message to the second user, where the force renew message instructs the second user to request IP address renewal, and the force renew message carries an IP address of the DHCP server;
receive a DHCP renew request message sent by the second user, and transmit the DHCP renew request message to the DHCP server, where the DHCP renew request message is used to trigger the DHCP server to renew the IP address of the second user;
receive, from the DHCP server, a DHCP negative acknowledgement message that is sent by the DHCP server in response to the DHCP renew request message, where the DHCP negative acknowledgement message notifies the second user that the IP address already allocated to the second user is unavailable;
interact with the first user and the DHCP server to reallocate an IP address to the first user; and
interact with the second user and the DHCP server to reallocate an IP address to the second user.

That the transceiver module 601 interacts with the second user and the DHCP server to reallocate an IP address to the second user includes:
the transceiver module 601 receives a DHCP discovery message from the second user, and sends the DHCP discovery message to the DHCP server, where the DHCP discovery message is used to discover the DHCP server;
the transceiver module 601 receives a DHCP offer message from the DHCP server, and the relay device sends the DHCP offer message to the second user, where the DHCP offer message carries an IP address offered by the DHCP server;
the transceiver module 601 receives a DHCP request message from the second user, and sends the DHCP request message to the DHCP server, where the DHCP request message requests the DHCP server to allocate the IP address offered by the DHCP server; and
the transceiver module 601 receives a DHCP acknowledgement message from the DHCP server, where the DHCP acknowledgement message confirms to allocate the IP address offered by the DHCP server to the second user.

That the transceiver module 601 interacts with the first user and the DHCP server to reallocate an IP address to the first user includes:
the transceiver module 601 receives a DHCP discovery message from the first user, and sends the DHCP discovery message to the DHCP server, where the DHCP discovery message is used to discover the DHCP server;
the transceiver module 601 receives a DHCP offer message from the DHCP server, and the relay device sends the DHCP offer message to the first user, where the DHCP offer message carries an IP address offered by the DHCP server;
the transceiver module 601 receives a DHCP request message from the first user, and sends the DHCP request message to the DHCP server, where the DHCP request message requests the DHCP server to allocate the IP address offered by the DHCP server; and
the transceiver module 601 receives a DHCP acknowledgement message from the DHCP server, where the DHCP acknowledgement message confirms to allocate the IP address offered by the DHCP server to the first user.

The IP address reallocated to the second user is different from the IP address already allocated to the second user, and the IP address reallocated to the first user is different from the IP address already allocated to the second user.

Embodiment 7 of the present invention provides a relay device, including:
a transceiver module, configured to receive, from a DHCP Dynamic Host Configuration Protocol server, an IP address allocated to a first user; and
a detection module, configured to detect whether the IP address allocated to the first user and an IP address already allocated by the DHCP server to a second user are duplicate, and whether the IP address already allocated to the second user is still within a lease time, where the relay device may include a storage module, and the storage module stores the IP address already allocated to the second user and the lease time of the IP address already allocated to the second user; where
the transceiver module is further configured to: when the detection module detects that the IP address allocated to the first user and the IP address already allocated by the DHCP server to the second user are duplicate, and that the IP address already allocated to the second user is still within the lease time, send a DHCP reject message to the DHCP server, where the DHCP reject message is used to notify the DHCP server that the IP address allocated to the first user is unavailable, and the DHCP reject message carries the IP address allocated to the first user and a Media Access Control MAC address of the first user; and
interact with the first user and the DHCP server to reallocate an IP address to the first user, where the IP address reallocated to the first user is different from the IP address already allocated to the second user.

Optionally, the transceiver module is further configured to: before sending the DHCP reject message to the DHCP server, send a force renew message to the second user, where the force renew message instructs the second user to request IP address renewal, and the force renew message carries an IP address of the DHCP server. The detection module is further configured to: after the transceiver module sends the force renew message to the second user, wait for a predetermined time, and detect whether a DHCP renew request message is received from the second user within the predetermined time, where the DHCP renew request message is used to request to renew the IP address of the second user; and if no DHCP request message is received from the second user within the predetermined time, instruct the transceiver module to send the DHCP reject message to the DHCP server.

The transceiver module may be specifically a transceiver, and the detection module may be specifically a processor.

In this embodiment of the present invention, a relay device stores an IP address already allocated to a user and a lease time of the IP address already allocated to the user, and can recognize an IP address conflict. Therefore, a problem that some users cannot go online in a scenario of an IP address conflict is resolved by performing message forwarding, operation and maintenance costs of an existing network device in this scenario are reduced, service experience of the user is improved, and competitiveness of the relay device is enhanced.

Persons of ordinary skill in the art may understand that all or a part of the steps of the method in the embodiments of the present invention may be implemented by a program instructing relevant hardware. The program may be stored in a computer readable storage medium. When the program runs, the steps of the method in the embodiments of the present invention are performed. The storage medium may be at least one of the following media: media that are capable of storing program code, such as a Read-Only Memory (Read-Only Memory, ROM for short), a RAM, a magnetic disk, or an optical disc.

## Claims

1. An Internet Protocol, IP, address allocation method performed by a relay device, the method comprising the following steps:
**a.)** receiving from a Dynamic Host Configuration Protocol, DHCP, server, a first IP address allocated to a first user (S 501);
**b.)** detecting that the first IP address allocated to the first user and an IP address already allocated by the DHCP server to a second user are duplicate, and that the IP address already allocated to the second user is still within a lease time, wherein the relay device stores the IP address already allocated to the second user and the lease time of the IP address already allocated to the second user (S 502);
**c.)** sending a force renew message to the second user, wherein the force renew message instructs the second user to request IP address renewal, and the force renew message carries an IP address of the DHCP server (S 503);
**d.)** waiting for a predetermined time, and determining that no DHCP renew request message is received from the second user within the predetermined time, wherein the DHCP renew request message is used to request to renew the IP address of the second user (S 504);
**e.)** sending a DHCP reject message to the DHCP server, wherein the DHCP reject message is used to notify the DHCP server that the first IP address allocated to the first user is unavailable, and the DHCP reject message carries the first IP address allocated to the first user and a Media Access Control, MAC, address of the first user (S 508);
**f.)** interacting with the first user and the DHCP server to reallocate a second IP address to the first user, wherein the second IP address reallocated to the first user is different from the IP address already allocated to the second user (S 509).

2. The method according to claim 1, wherein before the sending the DHCP reject message to the DHCP server, the method further comprises:
checking whether the second user is online, and if the second user is online, sending the DHCP reject message to the DHCP server.

3. A relay device (600) configured and intended to perform any of the methods according to claims 1 - 2.

## Patentansprüche

1. IP-Adresszuweisungsverfahren ("Internet Protocol", IP), durchgeführt von einer Relaisvorrichtung, die folgenden Schritte umfassend:
a.) Empfangen einer ersten IP-Adresse, die einem ersten Benutzer zugewiesen ist, von einem DHCP-Server ("Dynamic Host Configuration Protocol", DHCP) (S 501);
b.) Erkennen, dass die erste IP-Adresse, die dem ersten Benutzer zugewiesen ist, und eine IP-Adresse, die vom DHCP-Server bereits einem zweiten Benutzer zugewiesen ist, doppelt sind, und dass die IP-Adresse, die bereits dem zweiten Benutzer zugewiesen ist, noch innerhalb einer Leasedauer liegt, wobei die Relaisvorrichtung die dem zweiten Benutzer bereits zugewiesene IP-Adresse und die Leasedauer der dem zweiten Benutzer bereits zugewiesenen IP-Adresse speichert (S 502);
c.) Senden einer Erneuern-erzwingen-Nachricht ("force renew message") an den zweiten Benutzer, wobei die Erneuern-erzwingen-Nachricht den zweiten Benutzer anweist, eine Erneuerung der IP-Adresse anzufordern, und die Erneuern-erzwingen-Nachricht transportiert eine IP-Adresse des DHCP-Servers (S 503);
d.) Warten für eine vorbestimmte Zeit und Bestimmen, dass keine DHCP-Erneuerungsanforderungsnachricht innerhalb der vorbestimmten Zeit vom zweiten Benutzer empfangen wird, wobei die DHCP-Erneuerungsanforderungsnachricht dazu genutzt wird, anzufordern, die IP-Adresse des zweiten Benutzers zu erneuern (S 504);
e.) Senden einer DHCP-Ablehnungsnachricht an den DHCP-Server, wobei die DHCP-Ablehnungsnachricht dazu genutzt wird, den DHCP-Server darauf hinzuweisen, dass die dem ersten Benutzer zugewiesene erste IP-Adresse nicht verfügbar ist, und wobei die DHCP-Ablehnungsnachricht die dem ersten Benutzer zugewiesene erste IP-Adresse und eine MAC-Adresse ("Media Access Control", MAC) des ersten Benutzers transportiert (S 508);
f.) Interagieren mit dem ersten Benutzer und dem DHCP-Server, um dem ersten Benutzer eine zweite IP-Adresse neu zuzuweisen, wobei die zweite IP-Adresse, die dem ersten Benutzer neu zugewiesen wird, sich von der dem zweiten Benutzer bereits zugewiesenen IP-Adresse unterscheidet (S 509).

2. Verfahren nach Anspruch 1, wobei das Verfahren vor dem Senden der DHCP-Ablehnungsnachricht an den DHCP-Server außerdem Folgendes umfasst:
Prüfen, ob der zweite Benutzer online ist, und sofern der zweite Benutzer online ist, Senden der DHCP-Ablehnungsnachricht an den DHCP-Server.

3. Relaisvorrichtung (600), die dafür eingerichtet und vorgesehen ist, jedes der Verfahren nach den Ansprüchen 1-2 auszuführen.

## Revendications

1. Procédé d'attribution d'adresse de protocole Internet, IP, réalisé par un dispositif de relais, le procédé comprenant les étapes suivantes :
a.) la réception en provenance d'un serveur de protocole de configuration dynamique des hôtes, DHCP, d'une première adresse IP attribuée à un premier utilisateur (S 501) ;
b.) la détection que la première adresse IP attribuée au premier utilisateur et qu'une adresse IP déjà attribuée par le serveur DHCP à un second utilisateur sont dupliquées, et que l'adresse IP déjà attribuée au second utilisateur est encore dans une période de bail, le dispositif relais mémorisant l'adresse IP déjà attribuée au second utilisateur et la durée de bail de l'adresse IP déjà attribuée au second utilisateur (S 502) ;
c.) l'envoi d'un message de renouvellement de force au second utilisateur, le message de renouvellement de force demandant au second utilisateur de demander le renouvellement d'adresse IP, et le message de renouvellement de force portant une adresse IP du serveur DHCP (S 503) :
d.) l'attente d'un temps prédéterminé, et la détermination qu'aucun message de demande de renouvellement DHCP n'est reçu du second utilisateur dans le temps prédéterminé, le message de demande de renouvellement DHCP étant utilisé pour demander de renouveler l'adresse IP du second utilisateur (S 504) ;
e.) l'envoi d'un message de rejet DHCP au serveur DHCP, le message de rejet DHCP étant utilisé pour notifier au serveur DHCP que la première adresse IP attribuée au premier utilisateur n'est pas disponible, et le message de rejet DHCP portant la première adresse IP attribuée au premier utilisateur et une adresse de contrôle d'accès au support, MAC, du premier utilisateur (S 508) ;
f.) l'interaction avec le premier utilisateur et le serveur DHCP pour réattribuer une deuxième adresse IP au premier utilisateur, la deuxième adresse IP réattribuée au premier utilisateur étant différente de l'adresse IP déjà attribuée au deuxième utilisateur (S 509).

2. Procédé selon la revendication 1, avant l'envoi du message de rejet DHCP au serveur DHCP, le procédé comprenant en outre :
la vérification si le deuxième utilisateur est en ligne, et si le deuxième utilisateur est en ligne, l'envoi du message de rejet DHCP au serveur DHCP.

3. Dispositif de relais (600) configuré et destiné à réaliser l'un quelconque des procédés selon les revendications 1-2.
